# EUROPEAN PATENT SPECIFICATION

(11) **EP 4 365 037 B1**
(45) Date of publication and mention of the grant of the patent: **15.01.2025**
(21) Application number: 22205856.2
(22) Date of filing: 07.11.2022
(51) Int. Cl.: B60R 21/38, B60R 5/02

(54) **STORAGE ASSEMBLY AND HOOD ASSEMBLY FOR A VEHICLE, VEHICLE AND METHOD FOR OPERATING A HOOD ASSEMBLY**
STAUANORDNUNG UND HAUBENANORDNUNG FÜR EIN FAHRZEUG, FAHRZEUG UND VERFAHREN ZUM BETREIBEN EINER HAUBENANORDNUNG
AGENCEMENT DE STOCKAGE ET AGENCEMENT DE CAPOT POUR UN VÉHICULE, VÉHICULE ET PROCÉDÉ DE ACTIONNEMENT D'UN AGENCEMENT DE CAPOT

(43) Date of publication of application: 08.05.2024
(73) Proprietor: Volvo Car Corporation, 405 31 Göteborg (SE)
(72) Inventor: LÖFSTEDT, Eric, 40531 Göteborg (SE); MELLERGÅRD, Edvin, 40531 Göteborg (SE)
(74) Representative: Maiwald GmbH

(56) References cited:
- EP-A1- 4 201 746
- DE-A1- 102019 108 937
- DE-A1- 102019 125 586
- US-A1- 2004 206 765
- US-A1- 2009 166 369
- US-A1- 2021 176 875

## Description

The present disclosure relates to a storage assembly for a vehicle.

Moreover, the present disclosure is directed to a hood assembly for a vehicle, comprising a hood part and a storage assembly as mentioned before.

Additionally, the present disclosure relates to a vehicle comprising a storage assembly as mentioned above and/or a hood assembly as mentioned above.

The present disclosure is also directed to a method for operating a hood assembly.

The storage assembly may form a front luggage compartment of the vehicle. Such a luggage compartment may be called a frunk. Front luggage compartments are often used in electric vehicles.

Especially if the storage assembly and the luggage compartment formed therewith is accessible from an exterior, care has to be taken that the storage assembly is reliably sealed when closed. In doing so, water, humidity, dirt and other undesired substances are stopped from entering an interior of the storage assembly. Of course, the storage assembly shall also be simple and comfortable in use, i.e. the handling and manipulation of the storage assembly shall require comparatively low forces. Consequently, a human user can handle and manipulate the storage assembly with comparatively low effort.

Beyond that, modern vehicles are often equipped with active safety systems configured to reduce an impact on a pedestrian in case of a collision between the vehicle and the pedestrian. Such active safety systems may comprise a mechanism for selectively lifting a hood part in case of the collision.

DE 10 2019 108 937 A1 shows a a storage assembly for a front luggage compartment of a vehicle with a storage receptacle for luggage according to the preamble of claim 1.
US 2021/176875 A1 shows a housing for an electronic device. US 2004/206765 A1 and
US 2009/166369 A1 show containers for food usable in a kitchen. EP 4 201 746 A1, that falls under Art. 54(3) EPC, shows a storage assembly for a vehicle.

In vehicles having both a front luggage compartment and an active safety system with a mechanism for selectively lifting a hood part, the corresponding components need to be arranged in the same space or adjacent to one another. It has been found that a certain conflict of objectives exists between the tight and reliable sealing and the comfortable use of a storage compartment on the one hand and a reliable and smooth operation of the mechanism for selectively lifting the hood part on the other hand.

Consequently, the problem to be solved by the present disclosure is to alleviate or solve this conflict of objectives.

The problem is at least partially solved or alleviated by the subject matter of the independent claims of the present disclosure, wherein further examples are incorporated in the dependent claims.

According to a first aspect, there is provided a storage assembly for a front luggage compartment of a vehicle. The storage assembly comprises a storage receptacle for luggage. The storage assembly being delimited by a bottom and a number of lateral walls. Moreover, the storage assembly comprises a lid being configured to selectively move between a closed position in which it closes the storage receptacle and an open position. The storage assembly additionally comprises a sealing arrangement being positioned at the storage receptacle or at the lid such that in the closed position of the lid, the sealing arrangement seals the storage receptacle with respect to the lid. At least one of the bottom, one of the lateral walls and the lid comprises a movable wall section. The movable wall section is movable with respect to the remaining sections of the bottom, the one of the lateral walls or the lid respectively. The movable wall section is connected to the remaining sections of the bottom, the one of the lateral walls or the lid respectively by means of a flexible connection zone, wherein the flexible connection zone circumferentially encloses the movable wall section. The storage assembly for example forms part of a front luggage compartment of the vehicle. Using the sealing arrangement, the storage receptacle can be reliably sealed with respect to an environment. To this end, the sealing arrangement is at least partially compressed between the storage receptacle and the lid, if the lid is in the closed position. Thus, the interior of the storage receptacle and objects being located therein, are reliably protected from environmental influences. In a case in which the storage assembly is used in combination with an active safety system comprising a mechanism for selectively lifting a hood part, it may be necessary to open the lid within a very short period of time. The movable wall section avoids that the opening of the lid is hindered or slowed down by an underpressure occurring when opening the lid while the sealing arrangement still contacts both the storage receptacle and the lid. In other words, the movable wall section is configured to compensate such an underpressure such that the lid may be opened within a very short period of time without being hindered. In this context, the movable wall section can move towards the interior of the receptacle. Due to the flexible connection zone circumferentially enclosing the movable wall section, the movable wall section is reliably connected to the remaining sections of the bottom, the one of the lateral walls or the lid respectively. At the same time, the flexible connection zone only creates a very small resistance with respect to a movement of the movable wall section that is performed in order to compensate the underpressure. It is noted that the movable wall section can be designed to be relatively large. Consequently, already a comparatively small movement of the movable wall section creates a comparatively large volume change of the interior of the receptacle. This allows an underpressure to be compensated with particularly high reliability within a particularly short period of time.

According to the disclosure, a stiffness of the movable wall section is bigger than a stiffness of the flexible connection zone. Consequently, when transferring the movable wall section between the first state and the second state, it is ensured that this movement is permitted by a deformation of the flexible connection zone and not by a deformation of the movable wall section. The different stiffness may be achieved by a different thickness, different material and/or a different form.

The flexible connection zone may also be called a deformation zone since it is deformed if the movable wall section performs a movement. The flexible connection zone may be elastically or classically deformed.

In an example, the movable wall section is not deformed when being moved.

It is noted that for the present disclosure it is assumed that the lid of the storage assembly is configured to form part of a hood part or to be fixedly connected to a hood part. Thus, the lid has a mounting interface by which it may be mounted on the hood part.

In an example, the flexible connection zone comprises or forms a bistable positioning mechanism for the movable wall section. This means that the movable wall section may assume two distinct positions relative to the remaining sections of the bottom, the one of the lateral walls or the lid respectively. In both of these relative positions, the movable wall section is stable. This means that in the absence of exterior forces, the movable wall section stays in one of the distinct relative positions. The two stable relative positions may be chosen such that little energy is necessary in order to transfer the movable wall section from one of these positions into the other one of these positions. Moreover, one of these positions may be associated with an active safety system not yet having been activated. The other one of these positions may be associated with the active safety system having been activated. The latter position may be called an underpressure compensation position. Altogether, the bistable positioning mechanism allows the movable wall section to reliably compensate an underpressure.

In an example, the movable wall section is arranged in the same plane as the remaining sections of the bottom, the one of the lateral walls or the lid respectively if the movable wall section is in a first state. The first state may be a stable state as mentioned above. Alternatively or additionally, the first state may be associated with the active safety system not yet being activated. Due to the fact that the movable wall section is arranged in the same plane as the remaining sections of the bottom, the one of the lateral walls or the lid respectively, the interior volume of the receptacle is not reduced by the movable wall section. Thus, the usability of the storage assembly remains the same as for a storage assembly without the movable wall section.

In an example, in the first state of the movable wall section, the flexible connection zone comprises a folded sheet material. In this context, a sheet material is to be understood as a material having a thickness which is small when being compared to a length and a width of the material. In a folded state, the sheet material only requires a comparatively small space. Additionally, a comparatively large amount of sheet material may be provided which allows a comparatively large movement of the movable wall section.

In an example, a cross section of the flexible connection zone being arranged perpendicular to a circumferential direction of the movable wall section is V-shaped or U-shaped or has a V-shaped or U-shaped portion. This is the case if the movable wall section is in the first position. The V-shaped or U-shaped form allows to have a comparatively big amount of material in the flexible connection zone without requiring a large space. The comparatively large amount of material can be used to allow a comparatively big movement of the movable wall section.

In a case in which the flexible connection zone comprises a cross section with two or more V-shaped or U-shaped, the cross section may also be designated as wave-shaped or ondulated. Alternatively, such a cross section may be described as a zigzag pattern. In such a configuration, a particularly large amount of material may be provided in the flexible connection zone within a comparatively small space.

In an example, the movable wall section is arranged in parallel to the remaining sections of the bottom, the one of the lateral walls or the lid respectively, if the movable wall section is in a second state. The second state may also be a stable state as has been explained above. Moreover, the second state may be associated to the active safety system having been activated. It is understood, that being parallel implies that a distance between the movable wall section and the remaining sections of the bottom, the one of the lateral walls or the lid respectively exceeds zero.

In an example, the flexible connection zone is extended with respect to the first state when in the second state. This means that the flexible connection zone is at least in one dimension larger when the movable wall section is in the second state as compared to the first state. In an example, a dimension of the flexible connection zone in a direction perpendicular to the movable wall section is larger if the movable wall section is in the second state than if the movable wall section is in the first state. This allows the movable wall section to reliably compensate an underpressure.

In an example, the flexible connection zone and the movable wall section are made from the same material. This renders the storage assembly structurally simple. Moreover, the flexible connection zone and the movable wall section may be produced together. In an example, the flexible connection zone at the movable wall section may be formed integrally. This is particularly efficient. The remaining sections of the bottom, the one of the lateral walls or the lid respectively may be made from a different material or the same material.

In an example, the flexible connection zone and the movable wall section do not overlap. This means that the flexible connection zone and the movable wall section are geometrically separate from one another. This may also be the case if the flexible connection zone and the movable wall section are made from the same material.

According to a second aspect, there is provided a hood assembly for a vehicle. The hood assembly comprises a hood part and a storage assembly according to the present disclosure. The lid for the storage receptacle is formed by the hood part or fixedly connected to the hood part. Consequently, the hood assembly is formed in a structurally simple and compact manner. At the same time, the hood assembly may be used together with an active safety system comprising a mechanism for selectively lifting the hood part. The operation of such a mechanism is not at all hindered by the storage receptacle. Reference is made to the above explanations.

As has been mentioned before, the storage assembly may form a front luggage compartment.

In an example, the hood assembly further comprises a lifting actuator being drivingly connected to the hood part and being configured to selectively lift the hood part. The lifting actuator may form part of a mechanism for selectively lifting the hood part of an active safety system. As has already been mentioned above, the operation of the lifting actuator is not at all or just slightly influenced by the storage assembly, since an underpressure that might be generated when lifting the lid and the hood part together is compensated reliably by the movable wall section. Thus, it can be guaranteed that the hood part can be lifted by the lifting actuator within a comparatively short period of time.

According to a third aspect, there is provided a vehicle comprising a storage assembly according to the present disclosure and/or a hood assembly according to the present disclosure. As before, the storage assembly may form part of a front luggage compartment. Thus, such a vehicle may be equipped with both a front luggage compartment and an active safety system for selectively lifting a hood part in case of an accident with a pedestrian. The active safety system is not negatively influenced by the storage assembly.

According to a fourth aspect, there is provided a method for operating a hood assembly according to the present disclosure, comprising:
- providing the lid in a closed state,
- lifting the hood part by operating the lifting actuator, such that at least temporarily an underpressure is generated inside the storage receptacle, and
- at least partially compensating the underpressure by moving the movable wall section towards the interior of the storage receptacle.

Due to the fact that the underpressure is at least partially compensated by the movable wall section, the lifting of the hood part is not at all or just slightly inhibited, i.e. slowed down, by the underpressure being generated inside the receptacle. Thus, it can be guaranteed that the hood part can be lifted by the lifting actuator within a comparatively short period of time.

In an example, the movable wall section moves from a first state in which the movable wall section is arranged in the same plane as the remaining sections of the bottom, the one of the lateral walls or the lid respectively into a second state in which the movable wall section is arranged parallel to the remaining sections of the bottom, the one of the lateral walls or the lid respectively. It is understood that in the second state, a distance between the movable wall section and the remaining sections of the bottom, the one of the lateral walls or the lid respectively exceeds zero. In performing such a movement, the movable wall section can compensate a comparatively big underpressure by a comparatively small movement within a comparatively small time. In other words, smooth operation of an active safety system comprising a mechanism for selectively lifting the hood part is guaranteed.

In an example, both the first state and the second state are stable states. This means that no external forces or external energy is needed in order to keep the movable wall section in one of the first state and the second state.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the drawings.
- Figure 1: shows a front portion of a vehicle according to the present disclosure comprising a hood assembly according to the present disclosure and a storage assembly according to the present disclosure, wherein the hood assembly may be operated using a method for operating a hood assembly according to the present disclosure,
- Figure 2: shows the storage assembly of Figure 1 in a separate, sectional view, wherein the movable wall section is in a first state,
- Figure 3: shows the storage assembly of Figure 1 in a separate, sectional view, wherein the view corresponds to the view of Figure 2 and the movable wall section is in a second state, and
- Figure 4: shows a combined detail view IV of Figures 2 and 3, wherein the movable wall section is shown in the first state and the second state.

The Figures are merely schematic representations and serve only to illustrate examples of the disclosure. Identical or equivalent elements are in principle provided with the same reference signs.

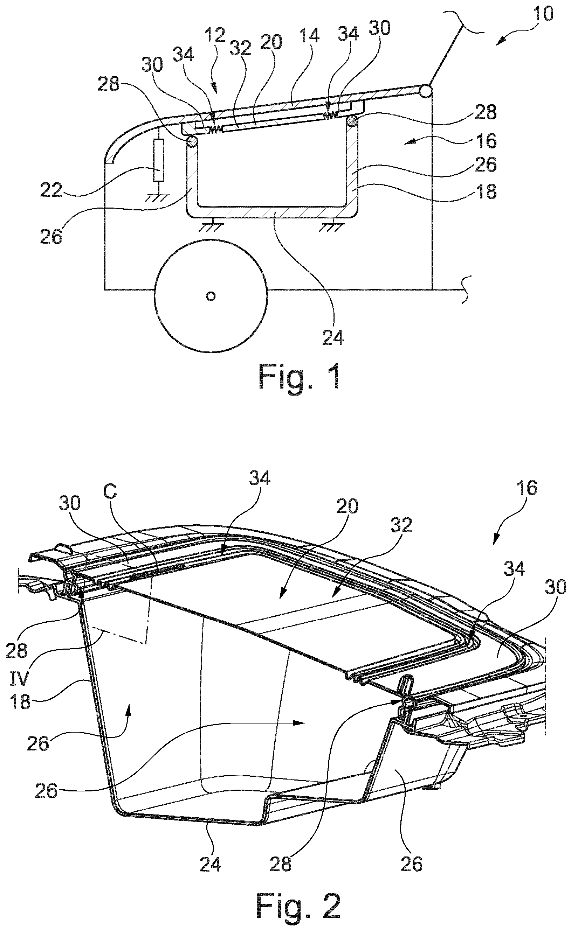

Figure 1 shows a front portion of a vehicle 10.

The vehicle 10 is equipped with a front luggage compartment that may also be called a frunk.

More precisely, the vehicle 10 comprises a hood assembly 12.

The hood assembly 12 comprises a hood part 14 and a storage assembly 16 with a storage receptacle 18 and a lid 20. Luggage or other objects may be placed inside the receptacle 18 and may be protected from environmental influences by closing the lid 20.

In the present example, the lid 20 for the storage receptacle 18 is fixedly connected to the hood part 14. This means that the lid 20 and the hood part 14 can only move together. In other words, the hood part 14 and the lid 20 need to be lifted in order to access the storage receptacle 18.

The hood assembly 12 also comprises a lifting actuator 22 forming part of an active safety system for reducing an impact on a pedestrian in case of a collision between the vehicle 10 and the pedestrian.

The lifting actuator 22 is drivingly connected to the hood part 14 and a structural element of the vehicle 10.

The lifting actuator 22 is configured to selectively lift the hood part 14 in case of a collision with the pedestrian. If possible, the hood part 14 is lifted shortly before the collision actually occurs. The lifting actuator 22 may be explosive-activated or pyro-technic.

If a contact between the pedestrian and the hood part 14 occurs once the hood part 14 has been moved into a lifted position, the hood part 14 can absorb crash energy by moving back down. This reduces the impact on the pedestrian.

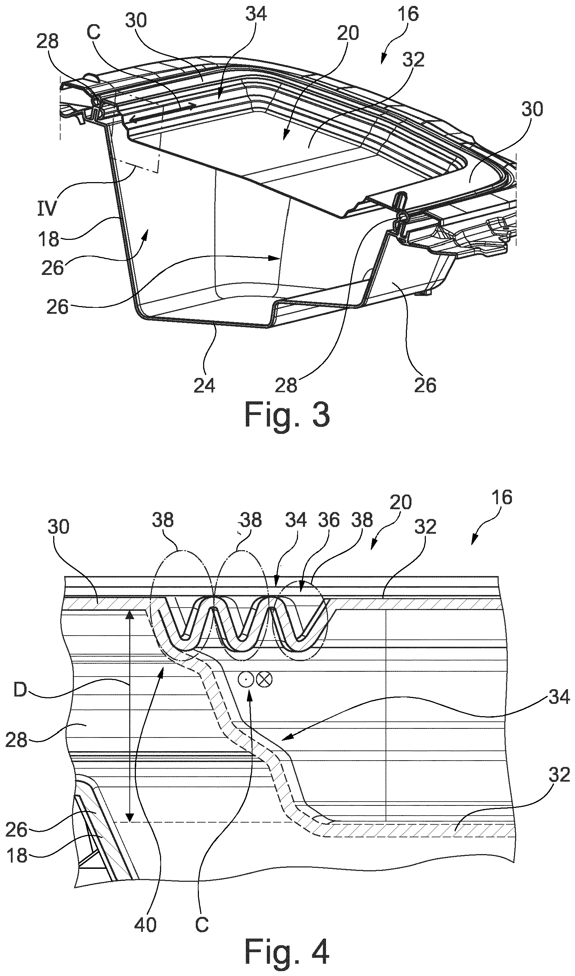

Figures 2 and 3 show the storage assembly 16. A detail view is provided in Figure 4, wherein, in contrast to reality, two states of a movable wall section of the storage assembly 16 are shown at the same time.

The storage receptacle 18 is delimited by a bottom 24 forming a stepped bottom surface in the present example, and a total of four lateral walls 26.

Due to the fact that the storage assembly 16 is represented in a sectional view, only some of the lateral walls 26 are shown.

The lid 20 is configured to move between a closed position in which it closes the storage receptacle 18 and an open position in which it renders the storage receptacle 18 accessible by a user of the vehicle 10.

As has been mentioned before, the lid 20 is fixedly connected to the hood part 14. Consequently, when moving the lid 20 from the open position into the closed position or vice versa, also the hood part 14 needs to be moved.

In order to exclude environmental effects from acting on the interior of the storage receptacle 18 or objects being placed therein, a sealing arrangement 28 is positioned at the lid 20 such that in the closed position of the lid 20, the sealing arrangement 28 seals the storage receptacle 18 with respect to the lid 20.

It is noted that, in another example, a sealing arrangement 28 having the same functionality could be fixedly connected to the rim of the storage receptacle 18.

In the present example, the lid 20 comprises a fixed wall section 30 which is shaped like a frame and a movable wall section 32 which has a substantially rectangular form.

The movable wall section 32 is located inside an opening of the frame-shaped fixed wall section 30.

Moreover, the movable wall section 32 is connected to the fixed wall section 30 by means of a flexible connection zone 34. The flexible connection zone 34 circumferentially encloses the movable wall section 32, i.e. extends along the circumferential direction C. In other words, the flexible connection zone 34 completely fills the gap between the rectangular movable wall section 32 and the frame-shaped fixed wall section 30.

It is noted that with respect to the entirety of the lid 20, the fixed wall section 30 may also be referred to as a remaining section 30 of the lid 20. The same reference sign 30 will, therefore, be used for the fixed wall section and the remaining section 30 of the lid 20.

In the present example, the flexible connection zone 34 and the movable wall section 32 are made from the same material, e.g. a plastics material. However, a stiffness of the movable wall section 32 is bigger than a stiffness of the flexible connection zone 34. This especially applies in a direction perpendicular to the movable wall section 32.

The movable wall section 32 can assume two stable states, wherein a first stable state is shown in Figure 2 (see also Figure 4 for details).

In the first stable state, the movable wall section and 32 and the fixed wall section 30 are substantially arranged in the same plane.

In this first state, the flexible connection zone 34 comprises a folded sheet material.

More precisely, a cross section 36 of the flexible connection zone 34 has V-shaped or U-shaped portions 38. The cross section is oriented perpendicular to a circumferential direction C of the movable wall 32.

In the present example, the cross section 36 comprises a total of three V-shaped or U-shaped portions 38. This can be seen best in Figure 4, wherein the movable wall section 32 and the flexible connection zone 34 being represented in solid lines correspond to the first state of the movable wall section 32.

Thus, in the present example, the cross section of the flexible connection zone 34 can also be called ondulated, wave-shaped or zig-zagged.

It is noted that in other examples, the cross section 36 may comprises more or less than three V-shaped or U-shaped portions 38.

Since the material of the flexible connection zone 34 is flexible, i.e. deformable, the movable wall section 32 may also assume a second stable state which is shown in Figure 3.

The second stable state is also represented in Figure 4, wherein dashed lines are used.

In the second stable state, the movable wall section 32 is arranged in parallel to the remaining sections, i.e. the fixed wall section 30 of the lid 20, whereas a distance D in a direction perpendicular to the movable wall section 32 exceeds zero (cf. Figure 4).

When regarding again the cross section of the flexible connection zone 34, the folded sheet material now is extended towards an interior of the storage receptacle 18. The flexible connection zone 34 especially is extended when being compared to the first stable state.

Since both the first state and the second state are stable states, the flexible connection zone 34 may also be designated as a bistable positioning mechanism 40 for the movable wall section 32.

The hood assembly 12 may be operated using a method for operating a hood assembly.

In an initial situation, the lid 20 is provided in a closed state, i.e. the lid 20 closes the storage receptacle 18.

Then, in case an accident with the pedestrian is detected or expected, the hood part 14 and the lid 20 may be lifted by operating the lifting actuator 22.

Due to the presence of the sealing arrangement 28 and due to the fact that in the closed state of the lid 20, the sealing arrangement 28 is at least partially compressed between the storage receptacle 18 and the lid 20, in the beginning of the lifting movement of the hood part 14 and the lid 20, and an underpressure is temporarily generated inside the receptacle 18.

The underpressure results from the fact that when lifting the hood part 14 and the lid 20 being fixedly connected thereto, a volume enclosed by the lid 20 and the storage receptacle 18 is increased. However, at the beginning of the lifting movement, the sealing arrangement 28 still reliably seals the lid 20 with respect to the storage receptacle 18 such that it is not possible that air from the exterior flows into the interior of the storage receptacle 18.

This temporary underpressure has the effect that the movable wall section 32 is moved from the first stable state into the second stable state. This means that the movable wall section 32 is moved towards the interior of the storage receptacle 18.

Thereby, the underpressure is at least partially compensated.

Since also the second state is a stable state, the movable wall section 32 stays in the second state even if the lid 20 and the hood part 14 are further lifted and the seal arrangement 28 does not provide an airtight connection between the lid 20 and the storage receptacle 18 anymore.

It is noted that in the present example the movable wall section 32 is arranged on the lid 20. However, additionally or alternatively it is possible to provide the movable wall section 32 on the bottom 24 or on any one of the lateral walls 26. The above explanations also apply to these alternatives.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: vehicle
- 12: hood assembly
- 14: hood part
- 16: storage assembly
- 18: storage receptacle
- 20: lid
- 22: lifting actuator
- 24: bottom
- 26: lateral walls
- 28: sealing arrangement
- 30: fixed wall section, remaining sections of the lid
- 32: movable wall section
- 34: flexible connection zone
- 36: cross section of the flexible connection zone
- 38: V-shaped or U-shaped portion
- 40: bistable positioning mechanism

- D: distance
- C: circumferential direction

## Claims

1. A storage assembly (16) for a front luggage compartment of a vehicle (10), comprising a storage receptacle (18) for luggage, the storage receptacle (18) being delimited by a bottom (24) and a number of lateral walls (26),
a lid (20) being configured to selectively move between a closed position in which it closes the storage receptacle (18) and an open position,
a sealing arrangement (28) being positioned at the storage receptacle (18) or at the lid (20) such that in the closed position of the lid (20), the sealing arrangement (28) seals the storage receptacle (18) with respect to the lid (20),
**characterized in that**
at least one of the bottom (24), one of the lateral walls (26) and the lid (20) comprises a movable wall section (32), that the movable wall section (32) is movable with respect to the remaining sections (30) of the bottom (24), the one of the lateral walls (26) or the lid (20) respectively and that the movable wall section (32) is connected to the remaining sections (30) of the bottom (24), the one of the lateral walls (26) or the lid (20) respectively by means of a flexible connection zone (34),
wherein the flexible connection zone (34) circumferentially encloses the movable wall section (32),
wherein a stiffness of the movable wall section (32) is bigger than a stiffness of the flexible connection zone (34).

2. The storage assembly (16) of claim 1, wherein the flexible connection zone (34) comprises or forms a bistable positioning mechanism (40) for the movable wall section (32).

3. The storage assembly (16) of claim 2, wherein in a first state, the movable wall section (32) is arranged in the same plane as the remaining sections (30) of the bottom (24), the one of the lateral walls (26) or the lid (20) respectively.

4. The storage assembly (16) of claim 3, wherein, in the first state of the movable wall section (32), the flexible connection zone (34) comprises a folded sheet material.

5. The storage assembly (16) of any one of claims 3 and 4, wherein a cross section (36) of the flexible connection zone (34) being arranged perpendicular to a circumferential direction (C) of the movable wall section (32) is V-shaped or U-shaped or has a V-shaped or U-shaped portion (38).

6. The storage assembly (16) of any one of claims 2 to 5, wherein in a second state, the movable wall section (32) is arranged in parallel to the remaining sections (30) of the bottom (24), the one of the lateral walls (26) or the lid (20) respectively.

7. The storage assembly (16) of claim 6 and any one of claims 3 to 5, wherein in the second state, the flexible connection zone (34) is extended with respect to the first state.

8. The storage assembly (16) of any one of the preceding claims, wherein the flexible connection zone (34) and the movable wall section (34) are made from the same material.

9. A hood assembly (12) for a vehicle (10), comprising a hood part (14) and a storage assembly (16) according to any one of the preceding claims, wherein the lid (20) for the storage receptacle (18) is formed by the hood part (14) or fixedly connected to the hood part (14).

10. The hood assembly (12) of claim 9, further comprising a lifting actuator (22) being drivingly connected to the hood part (14) and being configured to selectively lift the hood part (14).

11. A vehicle (10) comprising a storage assembly (16) according to any one of claims 1 to 8 and/or a hood assembly (12) according to claim 10.

12. A method for operating a hood assembly (12) of claim 10, comprising:
- providing the lid (20) in a closed state,
- lifting the hood part (14) by operating the lifting actuator (22), such that at least temporarily an underpressure is generated inside the storage receptacle (18), and
- at least partially compensating the underpressure by moving the movable wall section (32) towards the interior of the storage receptacle (18).

13. The method of claim 12, wherein the movable wall section (32) moves from a first state in which the movable wall section (32) is arranged in the same plane as the remaining sections (30) of the bottom (24), the one of the lateral walls (26) or the lid (20) respectively into a second state in which the movable wall section (32) is arranged parallel to the remaining sections (30) of the bottom (24), the one of the lateral walls (26) or the lid (20) respectively.

14. The method of claim 13, wherein both the first state and the second state are stable states.

## Patentansprüche

1. Verstauungsanordnung (16) für einen vorderen Gepäckraum eines Fahrzeugs (10), umfassend ein Verstauungsbehältnis (18) für Gepäck, wobei das Verstauungsbehältnis (18) von einem Boden (24) und einer Anzahl von Seitenwänden (26) begrenzt ist,
einen Deckel (20), der dazu eingerichtet ist, sich selektiv zwischen einer geschlossenen Position, in der er das Verstauungsbehältnis (18) verschließt, und einer offenen Position zu bewegen,
eine Dichtungsanordnung (28), die so an dem Verstauungsbehältnis (18) oder an dem Deckel (20) positioniert ist, dass die Dichtungsanordnung (28) in der Schließposition des Deckels (20) das Verstauungsbehältnis (18) in Bezug auf Deckel (20) abdichtet,
**dadurch gekennzeichnet, dass**
mindestens eines von dem Boden (24), einer der Seitenwände (26) und dem Deckel (20) eine bewegliche Wandsektion (32) umfasst, dass die bewegliche Wandsektion (32) in Bezug auf die übrigen Sektionen (30) des Bodens (24), der einen der Seitenwände (26) bzw. des Deckels (20) beweglich ist und dass die bewegliche Wandsektion (32) mit den übrigen Sektionen (30) des Bodens (24), der einen der Seitenwände (26) bzw. des Deckels (20) mittels einer flexiblen Verbindungszone (34) verbunden ist,
wobei die flexible Verbindungszone (34) die bewegliche Wandsektion (32) umfänglich umschließt,
wobei eine Steifigkeit der beweglichen Wandsektion (32) größer ist als eine Steifigkeit der flexiblen Verbindungszone (34).

2. Verstauungsanordnung (16) nach Anspruch 1, wobei die flexible Verbindungszone (34) einen bistabilen Positionierungsmechanismus (40) für die bewegliche Wandsektion (32) umfasst oder bildet.

3. Verstauungsanordnung (16) nach Anspruch 2, wobei in einem ersten Zustand die bewegliche Wandsektion (32) in derselben Ebene angeordnet ist wie die übrigen Sektionen (30) des Bodens (24), der einen der Seitenwände (26) bzw. des Deckels (20) .

4. Verstauungsanordnung (16) nach Anspruch 3, wobei in dem ersten Zustand der beweglichen Wandsektion (32) die flexible Verbindungszone (34) ein gefaltetes Flachmaterial umfasst.

5. Verstauungsanordnung (16) nach einem der Ansprüche 3 und 4, wobei ein Querschnitt (36) der flexiblen Verbindungszone (34), der senkrecht zu einer Umfangsrichtung (C) der beweglichen Wandsektion (32) angeordnet ist, V-förmig oder U-förmig ist oder einen V-förmigen oder U-förmigen Abschnitt (38) aufweist.

6. Verstauungsanordnung (16) nach einem der Ansprüche 2 bis 5, wobei in einem zweiten Zustand die bewegliche Wandsektion (32) parallel zu den übrigen Sektionen (30) des Bodens (24), der einen der Seitenwände (26) bzw. des Deckels (20) angeordnet ist.

7. Verstauungsanordnung (16) nach Anspruch 6 und einem der Ansprüche 3 bis 5, wobei in dem zweiten Zustand die flexible Verbindungszone (34) in Bezug auf den ersten Zustand verlängert ist.

8. Verstauungsanordnung (16) nach einem der vorangehenden Ansprüche, wobei die flexible Verbindungszone (34) und die bewegliche Wandsektion (34) aus dem gleichen Material hergestellt sind.

9. Haubenanordnung (12) für ein Fahrzeug (10), die einen Haubenteil (14) und eine Verstauungsanordnung (16) nach einem der vorangehenden Ansprüche umfasst, wobei der Deckel (20) für das Verstauungsbehältnis (18) von dem Haubenteil (14) gebildet ist oder fest mit dem Haubenteil (14) verbunden ist.

10. Haubenanordnung (12) nach Anspruch 9, umfassend des Weiteren einen Hebeaktuator (22), der antreibend mit dem Haubenteil (14) verbunden und dazu eingerichtet ist, den Haubenteil (14) selektiv anzuheben.

11. Fahrzeug (10), umfassend eine Verstauungsanordnung (16) nach einem der Ansprüche 1 bis 8 und/oder eine Haubenanordnung (12) nach Anspruch 10.

12. Verfahren zum Betätigen einer Haubenanordnung (12) nach Anspruch 10, umfassend:
- Bereitstellen des Deckels (20) in einem geschlossenen Zustand,
- Anheben des Haubenteils (14) durch Betätigen des Hebeaktuators (22) so, dass mindestens zeitweise ein Unterdruck im Inneren des Verstauungsbehältnisses (18) erzeugt wird, und
- mindestens teilweises Ausgleichen des Unterdrucks durch Bewegen der beweglichen Wandsektion (32) in Richtung des Inneren des Verstauungsbehältnisses (18).

13. Verfahren nach Anspruch 12, wobei sich die bewegliche Wandsektion (32) von einem ersten Zustand, in dem die bewegliche Wandsektion (32) in derselben Ebene wie die übrigen Sektionen (30) des Bodens (24), der einen der Seitenwände (26) bzw. des Deckels (20) angeordnet ist, in einen zweiten Zustand, in dem die bewegliche Wandsektion (32) parallel zu den übrigen Sektionen (30) des Bodens (24), der einen der Seitenwände (26) bzw. des Deckels (20) angeordnet ist, bewegt.

14. Verfahren nach Anspruch 13, wobei sowohl der erste Zustand als auch der zweite Zustand stabile Zustände sind.

## Revendications

1. Ensemble de rangement (16) pour un compartiment à bagages avant d'un véhicule (10), comprenant un bac de rangement (18) pour des bagages, le bac de rangement (18) étant délimité par un fond (24) et plusieurs parois latérales (26),
un couvercle (20) étant configuré pour être sélectivement déplacé entre une position fermée dans laquelle il ferme le bac de rangement (18) et une position ouverte,
un agencement d'étanchéité (28) étant positionné sur le bac de rangement (18) ou sur le couvercle (20) de telle sorte que dans la position fermée du couvercle (20), l'agencement d'étanchéité (28) rend le bac de rangement (18) étanche par rapport au couvercle (20),
**caractérisé en ce qu'**au moins un parmi le fond (24), l'une des parois latérales (26) et le couvercle (20) comprend une section de paroi mobile (32), que la section de paroi mobile (32) est mobile par rapport aux sections restantes (30) du fond (24), à l'une parmi les parois latérales (26) ou au couvercle (20) respectivement, et que la section de paroi mobile (32) est reliée aux sections restantes (30) du fond (20), de l'une parmi les parois latérales (26) ou du couvercle (20) respectivement au moyen d'une zone de liaison souple (34),
dans lequel la zone de liaison souple (34) entoure la section de paroi mobile (32) de manière circonférentielle, dans lequel une rigidité de la section de paroi mobile (32) est plus grande qu'une rigidité de la zone de liaison souple (34) .

2. Ensemble de rangement (16) selon la revendication 1, dans lequel la zone de liaison souple (34) comprend ou forme un mécanisme de positionnement bistable (40) pour la section de paroi mobile (32).

3. Ensemble de rangement (16) selon la revendication 2, dans lequel, dans un premier état, la section de paroi mobile (32) est agencée dans le même plan que les sections restantes (30) du fond (24), de l'une parmi les parois latérales (26) ou du couvercle (20) respectivement.

4. Ensemble de rangement (16) selon la revendication 3, dans lequel, dans le premier état de la section de paroi mobile (32), la zone de liaison souple (34) comprend un matériau en tôle pliée.

5. Ensemble de rangement (16) selon l'une quelconque des revendications 3 et 4, dans lequel une section transversale (36) de la zone de liaison souple (34) étant agencée perpendiculairement à une direction circonférentielle (C) de la section de paroi mobile (32) est en forme de V ou en forme de U ou a une portion en forme de V ou en forme de U (38) .

6. Ensemble de rangement (16) selon l'une quelconque des revendications 2 à 5, dans lequel, dans un second état, la section de paroi mobile (32) est agencée parallèlement aux sections restantes (30) du fond (24), de l'une parmi les parois latérales (26) ou du couvercle (20) respectivement.

7. Ensemble de rangement (16) selon la revendication 6 et l'une quelconque des revendications 3 à 5, dans lequel, dans le second état, la zone de liaison souple (34) est prolongée par rapport au premier état.

8. Ensemble de rangement (16) selon l'une quelconque des revendications précédentes, dans lequel la zone de liaison souple (34) et la section de paroi mobile (34) sont constituées du même matériau.

9. Ensemble de capot (12) pour un véhicule (10), comprenant une partie de capot (14) et un ensemble de rangement (16) selon l'une quelconque des revendications précédentes, dans lequel le couvercle (20) pour le bac de rangement (18) est formé par la partie de capot (14) ou est fixement relié à la partie de capot (14).

10. Ensemble de capot (12) selon la revendication 9, comprenant en outre un actionneur de levage (22) étant relié à la partie de capot (14) de manière motrice et étant configuré pour soulever sélectivement la partie de capot (14).

11. Véhicule (10) comprenant un ensemble de rangement (16) selon l'une quelconque des revendications 1 à 8 et/ou un ensemble de capot (12) selon la revendication 10.

12. Procédé pour faire fonctionner un ensemble de capot (12) selon la revendication 10, comprenant de :
- fournir le couvercle (20) dans un état fermé,
- soulever la partie de capot (14) en faisant fonctionner l'actionneur de levage (22), de telle sorte qu'une dépression est générée au moins temporairement à l'intérieur du bac de rangement (18), et
- compenser au moins partiellement la dépression en déplaçant la section de paroi mobile (32) vers l'intérieur du bac de rangement (18).

13. Procédé selon la revendication 12, dans lequel la section de paroi mobile (32) passe d'un premier état dans lequel la section de paroi mobile (32) est agencée dans le même plan que les sections restantes (30) du fond (24), de l'une parmi les parois latérales (26) ou du couvercle (20) respectivement, à un second état dans lequel la section de parole mobile (32) est agencée parallèlement aux sections restantes (30) du fond (24), de l'une parmi les parois latérales (26) ou du couvercle (20) respectivement.

14. Procédé selon la revendication 13, dans lequel le premier état et le second état sont tous deux des états stables.
